# EUROPÄISCHE PATENTSCHRIFT

(11) **EP 0 500 868 B1**
(45) Veröffentlichungstag und Bekanntmachung des Hinweises auf die Patenterteilung: **03.01.1996**
(21) Anmeldenummer: 91915789.1
(22) Anmeldetag: 10.09.1991
(51) Int. Cl.: F16J 15/32, B60S 1/16

(54) **ANTRIEBSVORRICHTUNG, INSBESONDERE FÜR SCHEIBENWISCHER AN KRAFTFAHRZEUGEN**
DRIVE UNIT, IN PARTICULAR FOR VEHICLE WINDSCREEN WIPERS
DISPOSITIF D'ENTRAINEMENT, NOTAMMENT D'ESSUIE-GLACES DE VEHICULES A MOTEUR

(30) Priorität: 12.09.1990 DE 4028892
(43) Veröffentlichungstag der Anmeldung: 02.09.1992
(73) Patentinhaber: ITT Automotive Europe GmbH, D-60488 Frankfurt am Main (DE)
(72) Erfinder: CSERMAK, Martin, D-7120 Bietigheim-Bissingen (DE); WALTHER, Bernd, D-7120 Bietigheim-Bissingen (DE)
(86) Internationale Anmeldenummer: EP9101715
(87) Internationale Veröffentlichungsnummer: WO9204563

(56) Entgegenhaltungen:
- DE-A- 3 914 231
- DE-B- 1 118 341
- DE-U- 8 815 533

## Beschreibung

Die Erfindung betrifft eine Antriebsvorrichtung, insbesondere für Scheibenwischer an Kraftfahrzeugen, mit einer aus einer Stirnseite eines Lagergehäuses der Antriebsvorrichtung herausragenden Welle, und mit einem zylindrischen Gleitlager, das in das Lagergehäuse mit geringem Abstand zu dessen Stirnseite eingesetzt ist, und mit einem durch das Gleitlager, das Lagergehäuse und die Welle begrenzten Ringspalt.

Eine solche Antriebsvorrichtung ist vom serienmäßigen Einsatz in Kraftfahrzeugen her bekannt. Bei dieser bekannten Antriebsvorrichtung ist das Lagergehäuse Teil eines an einem Elektromotor angeflanschten Getriebegehäuses. Die aus der Stirnseite des Lagergehäuses herausragende, vom Elektromotor über im Getriebegehäuse untergebrachte Getriebeglieder rundlaufend oder pendelnd angetriebene Welle dient als Wischerwelle, die einen aus Wischerarm und Wischerblatt bestehenden Wischerarm trägt. Das Gleitlager ist bis zu einem Anschlag soweit in das Lagergehäuse eingeschoben, daß es einen geringen Abstand zur Stirnseite des Lagergehäuses besitzt. Die bekannte Antriebsvorrichtung besitzt nun den Nachteil, daß sie eine aufwendige Abdichtung des zwischen dem Lagergehäuse und der Welle vorhandenen Ringspaltes benötigt. Bei der bekannten Antriebsvorrichtung ist nämlich vorgesehen, daß ein Dichtring in den Ringspalt zwischen Welle und Lagegehäuse eingebracht wird. Um ein Entweichen des Dichtrings aus dem Ringspalt zu verhindern, ist ein Sicherungsring nötig, der in eine Nut der Welle eingreift. Die durch den in den Ringspalt eingeführten Dichtring und den Sicherungsring gebildete Abdichtung des Ringspaltes zwischen Wischerwelle und Lagergehäuse bedingt aufgrund ihrer zweiteiligen Ausführung verhältnismäßig hohe Herstellungskosten. Desweiteren ist auch die Montage der bekannten Abdichtung für den Ringspalt einer derartigen Antriebsvorrichtung schwierig durchzuführen, da die senkrecht zur Achse der Welle vorzunehmende Justage des Sicherungsringes immer mit Schwierigkeiten verbunden und nicht einfach zu automatisieren ist.

Zur Vermeidung dieser Nachteile stellt sich die Erfindung die Aufgabe, eine Antriebsvorrichtung der eingangs genannten Art derart weiterzubilden, daß eine einfache, kostengünstige und leicht durchführbare Abdichtung erreicht wird.

Diese Aufgabe wird erfindungsgemäß durch eine am Lagergehäuse festsitzende, aus elastischem Material gefertigte Buchse gelöst, die den Ringspalt zwischen Lagergehäuse und Wischerwelle verschließt, und die an ihrem dem Lagergehäuse abgewandten Ende einen radial vorspringenden Dichtflansch aufweist, welcher in eine Ringnut der Welle eingreift.

Durch die erfindungsgemäßen Maßnahmen wird in besonders einfacher Art und Weise eine Abdichtung des zwischen der Welle und dem Lagergehäuse der Antriebsvorrichtung vorhandenen Ringspaltes erreicht: Die erfindungsgemäße Buchse erfüllt in besonders vorteilhafter Weise sowohl die Funktion des Dichtringes als auch die des Sicherungsringes der bekannten Antriebsvorrichtung. Die einstückige Ausführung der erfindungsgemäßen Abdichtung besitzt den Vorteil, daß diese beträchtlich kostengünstiger herzustellen und einfacher zu montieren ist als eine zweistückige, aus Dichtring und Sicherungsring bestehende Abdichtung. Die Montage der erfindungsgemäßen Buchse im Ringspalt ist einer Automatisierung besonders einfach zugänglich, da diese besonders einfach durch ein axiales Aufschieben der Buchse auf die Welle und ein Einpressen in das Lagergehäuse erfolgt. Eine umständliche Justage eines Sicherungsringes ist vorteilhafterweise nicht erforderlich. Der an dem dem Lagergehäuse abgewandten Ende der erfingunsgemäßen Buchse vorgesehene, radial nach innen vorspringende Dichtflansch bewirkt in Verbindung mit der mit ihm zusammenwirkenden Ringnut der Welle, daß auch in diesem Bereich ein nachteiliges Eindringen von Nässe in das Lagergehäuse sicher und zuverlässig verhindert wird. Der in die Ringnut eingreifende Dichtflansch der erfindungsgemäßen Buchse bewirkt außerdem, daß eine axiale Verschiebung der Buchse auf der Welle verhindert wird.

Bei einer bevorzugten Ausführung der Erfindung ist vorgesehen, daß die Buchse in den Ringspalt einschiebbar ist und einen über die Stirnseite des Lagergehäuses greifenden, radial nach außen gerichteten Ringflansch aufweist. Dabei ist die Außenabmessung eines in den Ringspalt eintauchenden zylindrischen Körpers der Buchse derart auf die Innenabmessung des Lagergehäuses abgestimmt, daß die Buchse in montiertem Zustand festsitzend mit dem Lagergehäuse verbunden ist. Durch diese erfindungsgemäßen Maßnahmen wird in besonders einfacher Art und Weise sowohl eine zuverlässige Abdichtung des Ringspaltes als auch ein fester Sitz der Buchse im Lagergehäuse gewährleistet.

Eine vorteilhafte Weiterbildung der Erfindung sieht vor, daß die erfindungsgemäße Buchse an ihrem vorderen Ende mindestens einen axial verlaufenden, zum Lagergehäuse hin gerichteten Fortsatz aufweist, der in eine entsprechend geformte Ausnehmung an der Stirnseite des Lagergehäuses eingreift. Dadurch wird erfindungsgemäß erreicht, daß die Buchse in besonders hohem Maße verdrehsicher mit dem Lagergehäuse verbunden ist.

Vorteilhafte Weiterbildungen der Erfindung ergeben sich aus den Unteransprüchen.

Weitere Einzelheiten der Erfindung sind dem Ausführungsbeispiel zu entnehmen, das im folgenden anhand der Figuren beschrieben wird. Es zeigen:
- Figur 1: ein Ausführungsbeispiel der Antriebsvorrichtung,
- Figur 2: einen Längsschnitt durch den Bereich A der Fig. 1,
- Figur 3: einen Schnitt entlang der Linie III-III der Fig. 2.

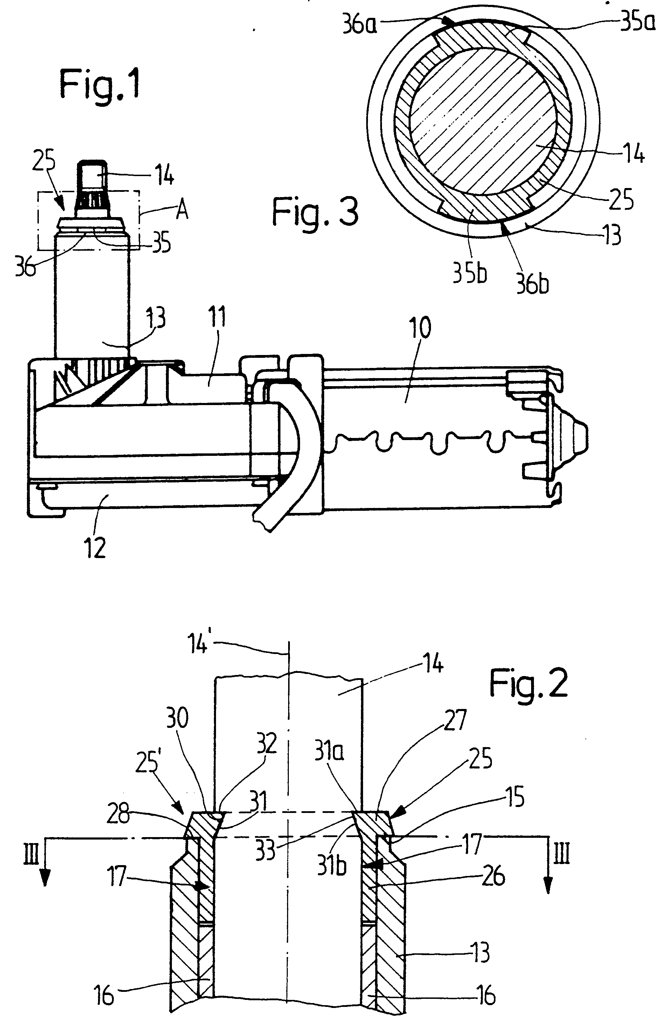

Die in Fig. 1 dargestellte Antriebsvorrichtung weist ein Motorengehäuse 10 auf, in dem sich im wesentlichen die stationären und rotierenden elektrischen Teile eines Elektromotors (nicht gezeigt) befinden. An das Motorengehäuse 10 ist ein topfförmiges Getriebegehäuse 11 angeflanscht, das von einem Deckel 12 verschlossen wird. An der dem Deckel 12 gegenüberliegenden Seite des Getriebegehäuses 11 ist ein Lagergehäuse 13 angeordnet, in dem eine Wischerwelle 14 drehbar gelagert ist. Die Wischerwelle 14, welche aus einer dem Getriebegehäuse 11 abgewandten Stirnseite 15 des Lagergehäuses 13 herausragt, wird von dem Elektromotor über in dem Getriebegehäuse 11 untergebrachte Getriebeglieder rundlaufend oder pendelnd angetrieben. Zur Lagerung der Wischerwelle 14 in dem Lagergehäuse 13 sind in dieses zwei zylindrische Gleitlager 16 (siehe Fig. 2) von entgegengesetzten Richtungen aus jeweils bis zu einer Schulter eingepreßt. Diese Pressung ist so stark, daß sich die Gleitlager 16 gegenüber dem Lagergehäuse 13 nicht verdrehen können. Die beiden Schultern innerhalb des Lagergehäuses 13 sind um ein bestimmtes Maß voneinander entfernt, so daß die beiden Gleitlager 16 einen gewissen Abstand voneinander aufweisen. Das in Figur 2 dargestellte obere Gleitlager 16 der beiden in das Lagergehäuse 13 eingepreßten Gleitlager begrenzt in axialer Richtung einen an der Stirnseite 15 des Lagergehäuses 13 vorhandenen Ringspalt 17, der durch den Raum zwischen Wischerwelle 14 und dem Lagergehäuse 13 gebildet wird.

Besonders wichtig ist nun die Ausbildung einer aus gummielastischem Kunststoff gefertigten Buchse 25, die zur Abdichtung des Ringspaltes 17 dient. Die Buchse 25 besteht im wesentlichen aus einem hohlzylindrischen Körper 26, der festsitzend in den Ringspalt 17 einschiebbar ist. Das Außenmaß des hohlzylindrischen Körpers 26 der Buchse 25 ist auf das Innenmaß des Lagergehäuses 13 derart abgestimmt, daß sich die Buchse 25 zwar in das Lagergehäuse 13 eindrücken läßt, nach der Montage jedoch festsitzend gegenüber dem Lagergehäuse 13 angeordnet ist. Der Innendurchmesser des hohlzylindrischen Körpers 26 der Buchse 25 ist dabei derart festgelegt, daß seine Innenfläche an der Außenfläche der Wischerwelle 14 anliegt. An einem oberen, dem Lagergehäuse 13 abgewandten Ende 25' der Buchse 25 geht der hohlzylindrische Körper 26 integral in einen radial nach außen vorspringenden Ringflansch 27 über, welcher die Stirnseite 15 des Lagergehäuses 13 übergreift. Eine Außenschulter 28 des Ringflansches 27 liegt auf der Stirnfläche 15 des Lagergehäuses 13 auf und begrenzt derart den Weg der Buchse 25 in den Ringspalt 17 zwischen Lagergehäuse 13 und Wischerwelle 14.

Der Ringflansch 27 geht in seinem oberen, dem Lagergehäuse 13 abgewandten Bereich integral in einen radial nach innen gerichteten Dichtflansch 30 über, welcher in eine im Querschnitt sägezahnförmige Ringnut 31 der Wischerwelle 14 eingreift. Eine obere Fläche 32 des weiteren Ringflansches 30 liegt im montierten Zustand der Buchse 25 an einer orthogonal zur Achse 14' der Wischerwelle 14 verlaufenden ersten Flanke 31a der Ringnut 31 an und dichtet derart den Ringspalt 17 im Bereich der Wischerwelle 14 ab. Eine innere Fläche 33 des Dichtflansches 30 wird gegen eine zweite Flanke 31b der Ringnut 31 der Wischerwelle 14 gepreßt. Durch den Dichtflansch 30 und die mit ihm zusammenwirkende Ringnut 31 der Wischerwelle 14 wird in besonders vorteilhafter Art und Weise eine Abdichtung geschaffen, die den Ringspalt 17 auch im Bereich der Wischerwelle 14 sicher und zuverlässig abdichtet. Außerdem wird die Buchse 25 durch den in die Ringnut 31 der Wischerwelle 14 eingreifenden Dichtflansch 30 in axialer Richtung abgestützt, so daß eine ungewollte axiale Verschiebung der Buchse 25 verhindert wird.

Die festsitzende und verdrehsichere Halterung der Buchse 25 am Lagergehäuse 13 durch eine entsprechende Abstimmung der Außenmaße der Buchse 25 auf das Innenmaß des Lagergehäuses 13 reicht für den Normalfall aus. Eine vorteilhafte Weiterbildung der Buchse 25, die sich durch eine besonders hohe Verdrehsicherung gegenüber der Wischerwelle 14 auszeichnet, ist nachstehend beschrieben:

Wie am besten aus Fig. 3 sowie aus Fig. 1 ersichtlich ist, weist die Buchse 25 am Ringflansch 27 zwei axial nach unten, d.h. zum Lagergehäuse 13 hin gerichtete Fortsätze 35 auf, welche in entsprechend geformte Ausnehmungen 36 in der Stirnfläche 15 des Lagergehäuses 13 eingreifen. Diese Fortsätze 35 und die Ausnehmungen 36 bewirken in vorteilhafter Art und Weise eine verbesserte Verdrehsicherheit der Buchse 25 im Lagergehäuse 13. Die in Fig. 3 dargestellte erste und zweite Ausnehmung 36a und 36b sind diametral gegenüberliegend angeordnet und erstrecken sich jeweils über einen Winkelbereich von etwa 60°. Die diametrale Anordnung der mit den Ausnehmungen 36a und 36b zusammenwirkenden Fortsätze 35a und 35b, sowie der von ihnen eingenommene Winkelbereich besitzen nur beispielhaften Charakter. Es ist auch möglich, entweder nur eine oder auch mehr als zwei Ausnehmungen 36 in der Stirnfläche 15 des Lagergehäuses 13 sowie eine entsprechende Anzahl der mit diesen Ausnehmungen 36 zusammenwirkenden axialen Fortsätze 35 des Ringflansches 27 vorzusehen. Dem Fachmann ist klar ersichtlich, wie er die Anzahl und die Winkelerstreckung der Ausnehmungen 36 in der Stirnfläche 15 des Lagergehäuses, sowie der mit ihnen zusammenwirkenden Fortsätze 35 des Ringflansches 27 vorzunehmen hat, um die Buchse 25 hinsichtlich ihrer Verdrehsicherheit dem gewünschten Einsatzzweck anzupassen.

## Patentansprüche

1. Antriebsvorrichtung, insbesondere für Scheibenwischer an Kraftfahrzeugen, mit einer aus einer Stirnseite (15) eines Lagergehäuses (13) herausragenden Welle (14) und mit einem zylindrischen Gleitlager (16), das in das Lagergehäuse (13) mit geringem Abstand zu dessen Stirnseite (15) eingesetzt ist, und mit einem durch das Gleitlager (16), das Lagergehäuse (13) und die Welle (14) begrenzten Ringspalt (17), **gekennzeichnet durch** eine am Lagergehäuse (13) festsitzende, aus elastischem Material gefertigte Buchse (25), die den Ringspalt (17) vor dem Gleitlager (16) verschließt, und die an ihrem dem Lagergehäuse (13) abgewandten Ende einen radial nach innen vorspringenden Dichtflansch (30) aufweist, welcher in eine Ringnut (31) der Welle (14) eingreift.

2. Antriebsvorrichtung nach Anspruch 1, dadurch gekennzeichnet, daß die Buchse (25) in den Ringspalt (17) einschiebbar ist und einen über die Stirnseite (15) des Lagergehäuses (13) greifenden, radial nach außen gerichteten Ringflansch (27) aufweist.

3. Antriebsvorrichtung nach einem der Ansprüche 1 oder 2, dadurch gekennzeichnet, daß die Außenabmessung eines in den Ringspalt (17) einschiebbaren zylindrischen Abschnittes (26) der Buchse (25) derart auf die Innenabmessung des Lagergehäuses (13) abgestimmt ist, daß die Buchse (25) in montiertem Zustand festsitzend im Lagergehäuse (13) arretiert ist.

4. Antriebsvorrichtung nach Anspruch 3, dadurch gekennzeichnet, daß die Innenseite des zylindrischen Abschnitts (26) der Buchse (25) an der Welle (14) anliegt.

5. Antriebsvorrichtung nach einem der Ansprüche 2 - 4, dadurch gekennzeichnet, daß die Buchse (25) mit einer Außenschulter (28) des Ringflansches (27) an der Stirnfläche (15) des Lagergehäuses (13) anliegt.

6. Antriebsvorrichtung nach einem der vorhergehenden Ansprüche, dadurch gekennzeichnet, daß die Buchse (25) entlang des Ringflansches (27) mindestens einen axial verlaufenden und zum Lagergehäuse (13) hin gerichteten Fortsatz (35) aufweist, der in eine entsprechend geformte Ausnehmung (36) in der Stirnfläche (15) des Lagergehäuses (13) eingreift.

7. Antriebsvorrichtung nach Anspruch 6, dadurch gekennzeichnet, daß zwei Fortsätze (35a,35b) der Buchse (25) diametral gegenüberliegend angeordnet sind und in diametral gegenüberliegende Ausnehmungen (36a,36b) des Lagergehäuses (13) eingreifen.

8. Antriebsvorrichtung nach Anspruch 6 oder 7, dadurch gekennzeichnet, daß die Winkelerstreckung der Ausnehmungen (36,36a,36b) des Lagergehäuses (13) und die der axial verlaufenden Fortsätze (35,35a,35b) der Buchse (25) 60° betragen.

9. Antriebsvorrichtung nach einem der vorhergehenden Ansprüche, dadurch gekennzeichnet, daß die Buchse (25) aus einem gummielastischen Kunststoff gefertigt ist.

## Claims

1. A drive device, especially for wipers of motor vehicles, including a shaft (14) extending from a front face (15) of a bearing housing (13) and a cylindrical slide bearing (16) which is installed in the bearing housing (13) at a small distance from its front face (15), and an annular slot (17) limited by the slide bearing (16), the bearing housing (13) and the shaft (14), **characterized** by a bush (25) firmly fixed onto the bearing housing (13) and made of elastic material, which bush closes the annular slot (17) in front of the bearing housing (16) and, at its end remote from the bearing housing (13), has a radially inwardly projecting sealing flange (30) which engages into an annular groove (31) in the shaft (14).

2. A drive device as claimed in claim 1, **characterized** in that the bush (25) is adapted to be slipped into the annular slot (17) and has a radially outwardly directed annular flange (27) which extends over the front face (15) of the bearing housing (13).

3. A drive device as claimed in any one of claims 1 or 2, **characterized** in that the external dimension of a cylindrical member (26) of the bush (25) which is slidable into the annular slot (17) is adapted to the internal dimension of the bearing housing (13) so that the bush (25), in the mounted condition, is press fitted in the bearing housing (13).

4. A drive device as claimed in claim 3, **characterized** in that the internal side of the cylindrical member (26) of the bush (25) abuts on the shaft (14).

5. A drive device as claimed in any one of claims 2 to 4, **characterized** in that the bush (25), with an outer shoulder (28) of the annular flange (27), bears against the front face (15) of the bearing housing (13).

6. A drive device as claimed in any one of the preceding claims, **characterized** in that the bush (25), along the annular flange (27), includes at least one axially extending projection (35) directed towards the bearing housing (13) and engaging into a correspondingly formed recess (36) in the front face (15) of the bearing housing (13).

7. A drive device as claimed in claim 6, **characterized** in that two projections (35a, 35b) of the bush (25) are arranged diametrically opposite and engage into diametrically opposite recesses (36a, 36b) of the bearing housing (13).

8. A drive device as claimed in claim 6 or claim 7, **characterized** in that the angle area of the recesses (36, 36a, 36b) of the bearing housing (13) and the angle area of the axially extending projections (35, 35a, 35b) of the bush (25) amount to 60°.

9. A drive device as claimed in any one of the preceding claims, **characterized** in that the bush (25) is made of an elastomeric material.

## Revendications

1. Dispositif d'entraînement, notamment pour un essuie-glace disposé sur un véhicule automobile, comprenant un arbre (14), qui fait saillie sur une face frontale (15) d'un boîtier de palier (13), un palier lisse (16) cylindrique, qui est monté dans le boîtier de palier (13) à une faible distance de la face frontale (15) de ce boîtier de palier, et une fente annulaire (17) délimitée par le palier lisse (16), le boîtier de palier (13) et l'arbre (14), caractérisé par une douille (25) en matière élastique qui est immobilisée vis-à-vis du boîtier de palier (13) et ferme la fente annulaire (17) en avant du palier lisse (16) et qui, à son extrémité située à l'opposé du boîtier de palier (16), comporte une collerette d'étanchéité (30) qui fait saillie radialement vers l'intérieur et s'engage dans une gorge annulaire (31) de l'arbre (14).

2. Dispositif d'entraînement selon la revendication 1, caractérisé en ce que la douille (25) est agencée de façon à pouvoir être enfoncée dans la fente annulaire (17) et comprend une collerette annulaire (27) qui est en prise sur la face frontale (15) du boîtier de palier (13) et est orientée radialement vers l'extérieur.

3. Dispositif d'entraînement selon l'une des revendications 1 et 2, caractérisé en ce que la dimension extérieure d'une section cylindrique (26) de la douille (25) qui est agencée de façon à pouvoir être enfoncée dans la fente annulaire (17) est adaptée à la dimension intérieure du boîtier de palier (13) d'une façon telle qu'à l'état monté, la douille (25) est bloquée dans le boîtier de palier (13) de manière à être immobilisée.

4. Dispositif d'entraînement selon la revendication 3, caractérisé en ce que la face intérieure de la section cylindrique (26) de la douille (25) est en appui sur l'arbre (14).

5. Dispositif d'entraînement selon l'une des revendications 2 à 4, caractérisé en ce que la douille (25) est en appui, par un épaulement extérieur (28) de la collerette annulaire (27), sur la surface frontale (15) du boîtier de palier (13).

6. Dispositif d'entraînement selon l'une des revendications précédentes, caractérisé en ce que, le long de la collerette annulaire (27), la douille (25) comporte au moins une partie de prolongement (35) qui s'étend axialement et est dirigée vers le boîtier de palier (13) et qui est en prise dans un évidement (36) de forme correspondante pratiqué dans la surface frontale (15) du boîtier de palier (13).

7. Dispositif d'entraînement selon la revendication 6, caractérisé en ce que deux parties de prolongement (35a, 35b) de la douille (25) sont disposées d'une manière diamétralement opposée et sont en prise dans des évidements (36a, 36b) diamétralement opposés du boîtier de palier (13).

8. Dispositif d'entraînement selon la revendication 6 ou 7, caractérisé en ce que l'étendue angulaire des évidements (36, 36a, 36b) du boîtier de palier (13) et celle des parties de prolongement (35, 35a, 35b) de la douille (25) qui sont orientées axialement sont égales à 60°.

9. Dispositif d'entraînement selon l'une des revendications précédentes, caractérisé en ce que la douille (25) est en matière plastique à élasticité du type du caoutchouc.
